# EUROPEAN PATENT SPECIFICATION

(11) **EP 2 624 729 B1**
(45) Date of publication and mention of the grant of the patent: **27.07.2016**
(21) Application number: 11785478.6
(22) Date of filing: 27.09.2011
(51) Int. Cl.: A47J 31/00, A47J 31/04

(54) **METHOD AND SYSTEM FOR CARRYING A SOLVENT APPARATUS USING SAID SYSTEM**
VERFAHREN UND SYSTEM ZUR AUFNAHME EINES LÖSUNGSMITTELS UND VORRICHTUNG MIT DIESEM SYSTEM
PROCÉDÉ ET SYSTÈME POUR ACHEMINER UN SOLVANT, ET APPAREIL UTILISANT LEDIT SYSTÈME

(30) Priority: 09.10.2010 CN 201010512553
(43) Date of publication of application: 14.08.2013
(73) Proprietor: Koninklijke Philips N.V., 5656 AE Eindhoven (NL)
(72) Inventor: HA, Wan Kei Ricky, NL-5656 AE Eindhoven (NL)
(74) Representative: Coops, Peter
(86) International application number: PCT/IB2011/054234
(87) International publication number: WO 2012/046159

(56) References cited:
- FR-A- 1 083 599
- GB-A- 2 434 969
- US-A1- 2002 152 895
- US-B1- 7 351 576

## Description

### FIELD OF THE INVENTION

The invention relates to a method and a system for carrying a solvent, and apparatus using said system.

The invention may be used in the field of beverage preparation.

### BACKGROUND OF THE INVENTION

Known solutions for carrying a solvent, in particular from a lower point to a high point, for example make use of a non-pressure driven percolator which is often used in coffee machines. Such a type of percolator consists of a pot with a small chamber at the bottom which is placed closest to a heat source. A vertical tube leads from this chamber to the top of the percolator. Just below the upper end of this tube there is a perforated chamber. The desired quantity of solvent, i.e. water, is poured into the chamber of the pot and the desired amount of ingredients, i.e. ground coffee, is placed in the top chamber. After the percolator is placed on a heat source, the temperature rises until the water in the bottom small chamber boils. The rising vapor bubbles resulting from the boiling water, combined with the water pressure existing at the entrance of the tube, then force the solvent to rise in the tube. The hot water is distributed at the top over the perforated lid of the coffee chamber. This water then seeps through the ground ground coffee and leaves the coffee chamber through the bottom, dropping back into the lower half of the pot. The rest of the colder water at the bottom has meanwhile also been forced to rise in the tube, causing this whole cycle to repeat continually. A similar percolator is also known for preparing tea.

This known solution for carrying a solvent has limitations in the sense that the pumping mechanism works only with locally boiling water, so that the solvent spread on the raw ingredients (ground coffee, tea leaves, etc.) is nearly at 100°C. The temperature of solvent spread on the raw ingredients cannot be controlled, and is not always adapted to the preparation of any of the raw ingredients used, such as tea leaves that, according to the tea varieties, require a lower temperature for brewing an infusion.

A system for carrying a solvent is known from US 2002/0152895 A1.

### SUMMARY OF THE INVENTION

It is an object of the invention to propose an improved method and system for carrying a solvent. The invention is defined by the independent claims. The dependent claims define advantageous embodiments.

To this end, the system for carrying a solvent according to claim 1 is provided.

By generating an air flow by means of an air pump instead of vapor bubbles naturally generated by locally boiling solvent, solvent can reach the second extremity of the tube while having a much lower temperature than the boiling temperature of the solvent.

In a preferred embodiment of the system for carrying a solvent, the air pump is placed in the bottom part of said container.

This embodiment allows defining a system where all elements are attached to the container, which may facilitate manipulation of this system by users.

In a preferred embodiment of the system for carrying a solvent, the air pump comprises a magnetic coil and a diaphragm air pump, said magnetic coil being intended to generate an oscillating magnetic field for bringing said diaphragm air pump into movement.

This type of air pump is advantageous because of its low level of noise, and its limited number of elements.

In another preferred embodiment of the system for carrying a solvent, the system further comprises a base part cooperating with said container, and wherein said magnetic coil is placed in said base part, and said diaphragm air pump is placed in said bottom part.

This embodiment allows defining a system having a container of reduced dimensions, reduced weight, which may facilitate manipulation of this system by users.

In a preferred embodiment of the system for carrying a solvent, the system further comprises a one-way valve placed in the bottom part of said container, said one-way valve being intended to prevent solvent from entering into said air pump.

This feature allows improving safety of the system because solvent cannot enter the air pump.

In a preferred embodiment of the system for carrying a solvent, the system further comprises a heating element placed in the bottom part of said container, said heating element being intended to heat said solvent.

Placing the heating element in the bottom part allows an efficient and homogenous heating of the solvent.

The invention also proposes a method of carrying a solvent according to claim 10.

The invention also proposes an improved method and apparatus for preparing a beverage from a solvent and ingredients.

To this end, the apparatus for preparing a beverage from a solvent and ingredients according to the invention comprises:
- a system for carrying a solvent as mentioned above,
- an infuser placed at said second extremity, said infuser being intended to contain said ingredients and infuse said ingredients with the solvent exiting at the second extremity.

This embodiment allows defining an apparatus separating the ingredients from the main part of the solvent, thereby avoiding that ingredients being are infused for too long.

In a preferred apparatus for preparing a beverage, the apparatus further comprises:
- a second sensor for analyzing parameters in the composition of said solvent;
- a second control unit for stopping said air pump when the analyzed parameters reach a predetermined level.

This embodiment allows defining an apparatus capable of controlling the quality of the beverage being prepared, without any user actions.

In a preferred apparatus for preparing a beverage, the apparatus comprises:
- a system for carrying a solvent as mentioned above,
- an infuser placed at said second extremity, said infuser being intended to contain said ingredients and infuse said ingredients with the solvent exiting at the second extremity,
- a first sensor for measuring the temperature of said solvent;
- a first control unit for controlling, according to the measured temperature, the heating power of said heating element such that said solvent is maintained at a predetermined temperature. This embodiment allows defining an apparatus capable of controlling the temperature of the solvent being spread on the ingredients, which allows the preparation of various kinds of ingredients requiring different temperatures of infusion.

In an embodiment according to the invention, there is provided a method of preparing a beverage from a solvent and ingredients according to claim 12.

In a preferred method of preparing a beverage, the method further comprises the steps of:
- measuring the temperature of said solvent;
- controlling the heating power of a heating element placed in said container and intended to heat said solvent, such that said solvent is maintained at a predetermined temperature.

This method allows controlling the solvent temperature, which makes it suitable for the preparation of various kinds of ingredients requiring an infusion at different solvent temperatures.

In a preferred method of preparing a beverage, the method further comprises the steps of:
- analyzing parameters in the composition of said solvent;
- stopping the air pump when the analyzed parameters reach a predetermined level.

This method allows controlling the quality of the beverage being prepared, without any user actions.

Detailed explanations and other aspects of the invention will be given below.

### BRIEF DESCRIPTION OF THE DRAWINGS

Particular aspects of the invention will now be explained with reference to the embodiments described hereinafter and considered in connection with the accompanying drawings, in which identical parts or sub-steps are designated in the same manner:
Fig.1 depicts a system for carrying a solvent according to an embodiment of the invention,
Fig.2 depicts a system for carrying a solvent according to an embodiment of the invention,
Fig.3 depicts an air pump in a system for carrying a solvent according to an embodiment of the invention,
Fig.4 depicts a zoomed view of a system for carrying a solvent according to an embodiment of the invention,
Fig.5A and Fig.5B depict a system for carrying a solvent according to an embodiment of the invention,
Fig.6 depicts a system for carrying a solvent according to an embodiment of the invention,
Fig.7 depicts an apparatus for preparing a beverage from a solvent and ingredients according to an embodiment of the invention,
Fig.8 depicts an apparatus for preparing a beverage from a solvent and ingredients according to an embodiment of the invention,
Fig.9 depicts an apparatus for preparing a beverage from a solvent and ingredients according to another embodiment of the invention,
Fig. 10 depicts a system for carrying a solvent according to an embodiment of the invention with a pipe arrangement.

### DETAILED DESCRIPTION OF PREFERRED EMBODIMENTS

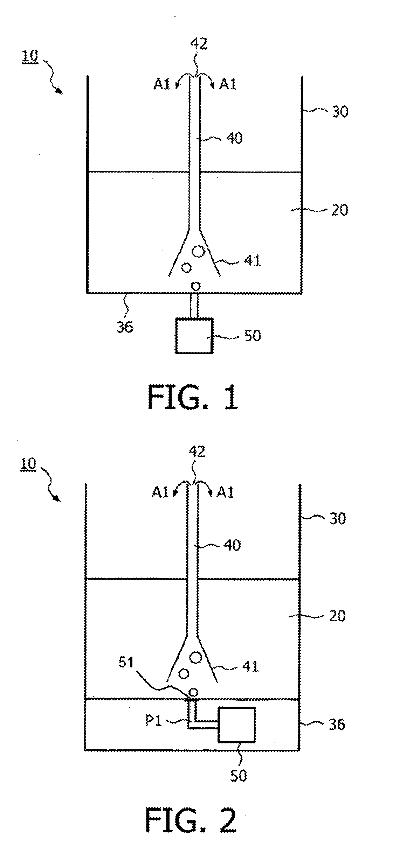

Fig.1 depicts a system for carrying a solvent according to an embodiment of the invention. In this embodiment, the system 10 for carrying a solvent 20 comprises a container 30, a tube 40 and an air pump 50.

The container 30 is for containing the solvent 20.

The tube 40 is placed in the container 30, and has a first extremity 41 placed in the proximity of a bottom part 36 of the container 30 and a second extremity 42 extending up to an upper part of the container 30.

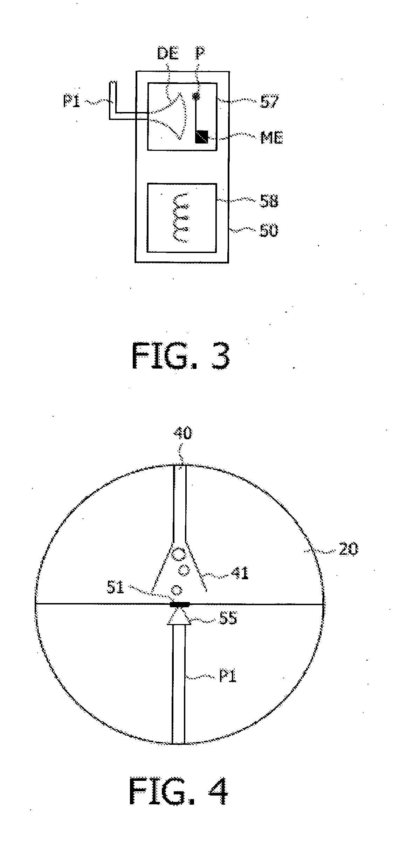

The air pump 50 is for generating an air flow exiting at the bottom part of the container 30, such that at least part of the air flow can enter the tube 40 at the first extremity 41, for carrying the solvent 20 in the tube 40 from the first extremity 41 to the second extremity 42, as illustrated by arrows A1 at the second extremity 42. The air flow is illustrated by white circles in solvent 20, under the first extremity 41. The air pump 50 may be of any types, but is preferably a diaphragm air pump as described in the following with reference to Fig.3.

It is appreciated that the tube 40 preferably extends vertically, so as to facilitate the movement of the air flow and the solvent therein. However, the tube 40 may also be such that its main axis departs from the vertical direction, for example by an angle between 0 and 45 degrees. Also, the tube 40 is preferably cylindrically shaped, but may alternatively have different shapes, such as a corkscrew shape, or curved shape. The tube 40 advantageously has an average diameter between 5 and 7 millimeters, or an average sectional area between 19.6 and 38.5 square millimeters. Advantageously, as illustrated in Fig.1, the first extremity 41 of tube 40 has a funnel-shaped entrance so that air flow generated by the air pump more easily enters the tube 40.

The air pump advantageously generates an air flow of between 1 and 2 liters per minute, and the pumping in tube 40 is efficient if at least 80 % of this air flow enters the tube at the first extremity 41.

The solvent 20 is preferably chosen, without limitation, from among the following solvents: water, mineral water, tap water, salted water, alcohol.

By generating an air flow by means of the air pump 50 instead of vapor bubbles naturally generated by locally boiling water, the solvent 20 can reach the upper part of the tube 40 while having a temperature much below the boiling temperature of the solvent.

Fig.2 depicts a system for carrying a solvent according to an embodiment of the invention. In this embodiment, the air pump 50 is placed at the bottom part 36 of the container 30. The air flow is pumped by the air pump 50, for example from outside the bottom part 36, to inside the container 30 via a pipe P1. The pipe P1 connects the air pump 50 and an opening 51 made in the bottom part 36. The opening 51 connects with the solvent 20. The air flow generated by the air pump 50 exits underneath the first extremity 41 of the tube 40, such that most of the air flow can enter the tube 40 at the first extremity 41.

Advantageously, the container 30 includes a recess (not illustrated in the Fig) in the bottom part 36 , with the first extremity 41 of the tube 40 extending into this recess and the exit of pipe P1 being placed underneath the first extremity 41.

Advantageously, the first extremity 41 of the tube 40 is funnel-shaped or conical-shaped, so as to facilitate the entry of the air flow into the tube 40.

Fig.3 depicts an air pump in a system for carrying a solvent according to an embodiment of the invention. In this embodiment, the air pump 50 comprises a magnetic coil 58 and a diaphragm air pump 57. The magnetic coil 58, by being supplied with alternating current (not illustrated), is intended to generate an oscillating magnetic field for bringing a metallic element ME of the diaphragm air pump 57 into movement. The metallic element ME acts as a pendulum around point P which is fixed relative to the air pump body. Because the diaphragm element DE is attached to the vertical arm of the metallic element, the movement of the metallic element ME is then communicated to the diaphragm element DE which is thus as a result generates an air flow via pipe P1.

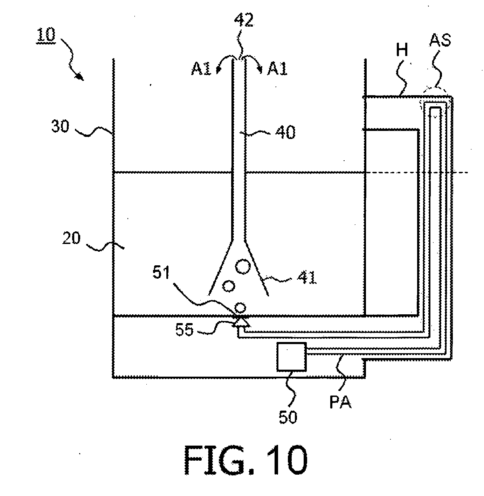

Fig.4 depicts a zoomed view of a system for carrying a solvent according to an embodiment of the invention. In this embodiment, the system 10 for carrying a solvent further comprises a one-way valve 55 connecting the air pump 50 (via pipe P1) and an opening 51 made in the bottom part 36, and preferably placed underneath the first extremity 41 in the bottom part 36 of container 30. The one-way valve 55 allows air entering the container 30 via the opening 51, but avoids the solvent 20 from leaking from the opening 51, thus preventing solvent 20 from entering into the air pump 50. Additionally, as depicted in Fig.10, the system 10 further comprises a pipe arrangement PA connecting the air pump 50 and the one-way valve 55, which pipe arrangement PA comprises an angled section AS positioned above the maximum surface level of the solvent 20. The maximum surface level of solvent can for example be indicated by a mark on the container 30. For example, the pipe arrangement PA can be placed inside a handle H of the system 10 (as illustrated), or inside the walls of the container 30 (not shown). The pipe arrangement PA first exits the air pump 50, then travels up along the handle and loops back downwards (in the angled section AS) until connecting the one-way valve 55. In the case the one-way valve 55 would malfunctions (i.e. the one-way valve do not avoid the solvent 20 from leaking from the opening 51), solvent 20 would flow back along the pipe arrangement PA and only reach a level (illustrated by the dashed line) corresponding to the surface of solvent 20 in the container, i.e. a level below the angled section AS, thus avoiding solvent to enter the air pump 50.

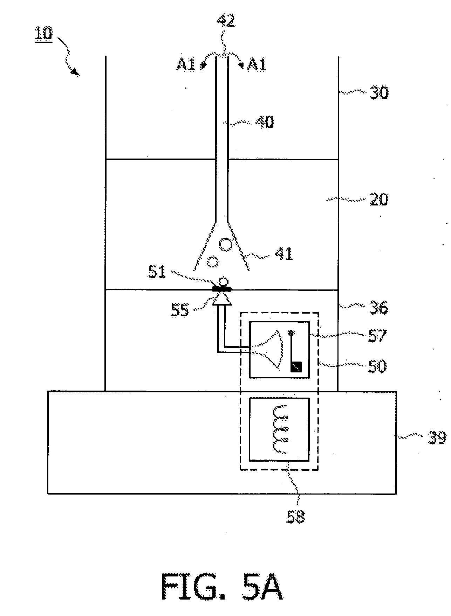

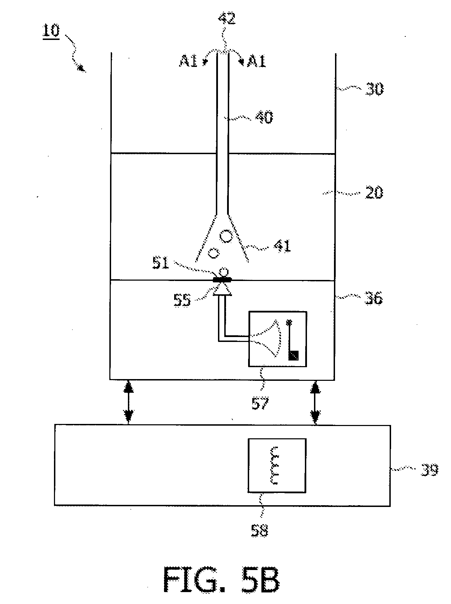

Fig.5A and Fig.5B depict a system for carrying a solvent according to an embodiment of the invention. In this embodiment, the system 10 comprises a container 30, a tube 40, an air pump 50 comprising the same elements as depicted in Fig.3, and a base part 39.

The air pump 50 is arranged such that the magnetic coil 58 is placed in the base part 39, and the diaphragm air pump 57 is placed in the bottom part 36 of the container 30. The base part 39 cooperates with the container 30, such that the container 30 can be removed from the base part 39, for example by a user, and put back in its initial position on the base part 39. Cooperation between base part 39 and container 30 is illustrated by the two vertical arrows in Fig.5B between the base part 39 and the bottom part 36.

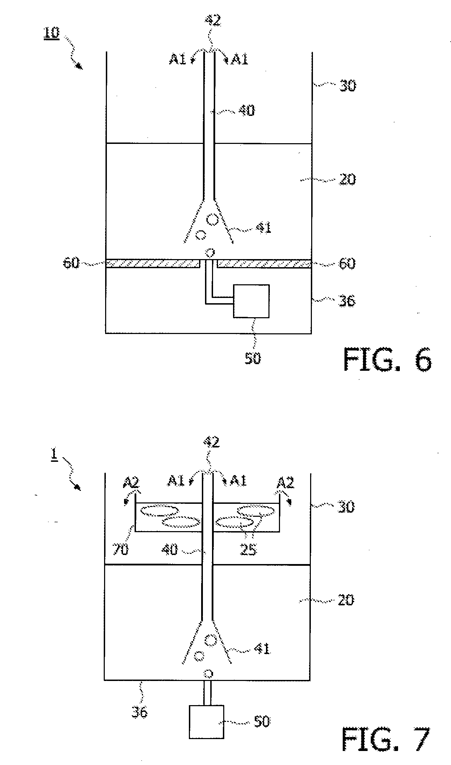

Fig.6 depicts a system for carrying a solvent according to an embodiment of the invention. In this embodiment, the system 10 for carrying a solvent further comprises a heating element 60 placed in the bottom part 36 of the container 30. The heating element 60 is intended to heat the solvent 20. For example, the heating element may correspond to a resistor (not illustrated) connected to an electrical source. Preferably, the heating power of the heating element is such that the solvent 20 is heated to over 60 degrees Centigrade, so as to improve the pumping effect in the tube 40.

Fig.7 depicts an apparatus 1 according to an embodiment of the invention for preparing a beverage from a solvent 20 and ingredients 25. In this embodiment, the apparatus 1 for preparing a beverage comprises a system 10 for carrying a solvent as described previously and illustrated in any of Figs. 1 to 6, and an infuser 70.

The infuser 70 is placed at the second extremity 42 of the tube 40. For example, as illustrated, the infuser can be placed in the container 30 and connected to the second extremity 42 of tube 40. When this apparatus is used, the quantity of solvent 20 that is poured into the container 30 is such that the infuser 70 stays above the surface of solvent 20. The infuser 70 is intended to contain the ingredients 25 and to infuse the ingredients 25 with the solvent 20 exiting from the second extremity 42, as illustrated by arrows A1 at the second extremity 42.

The ingredients 25 may be selected, without limitation, from among at least one of the following ingredients: tea leaves, plant leaves, ground coffee, herbs, plant roots, fruits, dry fruits.

After infusing in the infuser 70 the ingredients in the solvent, the solvent in the infuser 70 drops back into the container 30, as illustrated by arrows A2. Pumping the solvent in the container 30 into the tube 40, infusing in the infuser the ingredients with solvent contained in the infuser, the solvent in the infuser dropping back into the container, constitute a cycle that is repeated until the solvent in container 30 has reached a desired level of infusion of ingredients in the solvent.

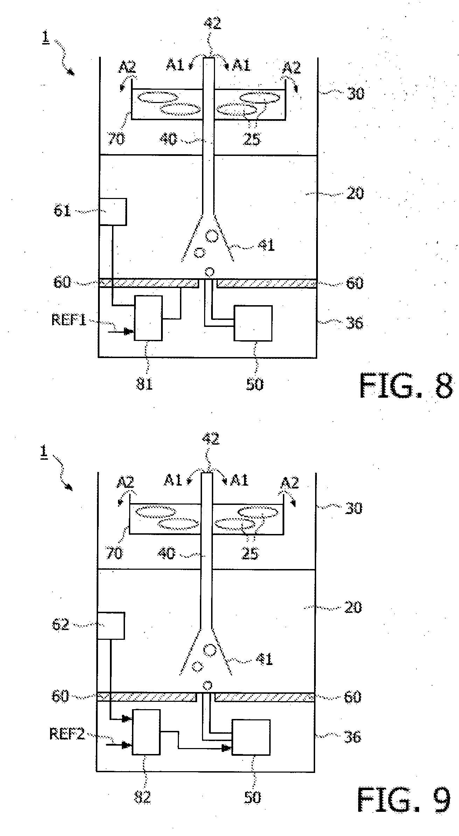

Fig.8 depicts an apparatus 1 for preparing a beverage from a solvent 20 and ingredients 25 according to another embodiment of the invention. In this embodiment, the apparatus 1 comprises a system 10 for carrying a solvent as illustrated in Fig.6, an infuser 70, a first sensor 61, a first control unit 81, and optionally, a heating element 60 as described with reference to Fig.6.

The infuser 70 is for example placed in the container 30 and connected to the second extremity 42 of the tube 40. When this apparatus is used, the quantity of solvent 20 that is poured into the container 30 is such that the infuser 70 is above the surface of the solvent 20. The infuser 70 is intended to contain the ingredients 25 and to infuse the ingredients 25 with the solvent 20 exiting from the second extremity 42, as illustrated by arrows A1 at the second extremity 42. After infusing in the infuser 70 the ingredients in the solvent, the solvent in the infuser 70 drops back into the container 30, as illustrated by arrows A2.

The first sensor 61 is intended to measure the temperature of the solvent 20. For example, a conventional resistance-based sensor, thermistor-based sensor, semiconductor diode-based sensor, or thermocouple-based sensor can be used. The first sensor 61 may for example be placed next to the walls of the container 30, or at any other suitable locations to measure the temperature of solvent 20.

The first control unit 81 is intended to control, according to the temperature measured by the first sensor 61, the heating power of the heating element 60 such that the solvent 20 is maintained at a predetermined temperature. The first sensor 61 is connected to the first control unit 81, and supplies a voltage (or current) signal to the first control unit 81 which signal is proportional to the temperature of solvent 20. The first control unit 81 is connected to the heating element 60 such that it can switch off or switch on the electrical power supply of the heating element 60. To this end, the first control unit 81 comprises a comparator for comparing the value of the voltage (or current) signal, and a reference signal REF1. The reference signal REF1 reflects the predetermined temperature that is desired for the solvent 20. If the voltage (or current) signal is above the reference signal REF1, indicating that the temperature is above the predetermined temperature, the electrical power supply of the heating element 60 is switched off. If the voltage (or current) signal is below the reference signal REF1, indicating that the temperature is below the predetermined temperature, the electrical power supply of the heating element 60 is switched on. According to this regulation scheme, the temperature of solvent 20 is maintained at a temperature corresponding to the predetermined temperature.

By changing the reference signal, it is possible to heat solvent to different temperatures is possible, which is suitable for the infusion of ingredients requiring different infusion temperatures.

For example:
- for infusing leaves of green tea used as ingredients, a predetermined temperature of 80 degrees is set.
- for infusing leaves of oolong tea used as ingredients, a predetermined temperature of 90 degrees is set.
- for infusing leaves of black tea used as ingredients, a predetermined temperature of 95 degrees is set.
- for infusing leaves of pu'er tea used as ingredients, a predetermined temperature of 100 degrees is set.

It is noted that this apparatus could also comprise (not illustrated) a bottom part 36 cooperating with a base part 39 as depicted in Fig.5, the magnetic coil of the air pump being placed in the base part, the diaphragm air pump being placed in the bottom part, the heating element 60 being placed in the bottom part 36 as shown in Fig.6, and the first control unit 81 being placed in the base part. Cooperation between bottom part 36 and base part 39 is realized thanks to a connector comprising a plug and a socket placed in the bottom part 36 or the base part 39, respectively. This connector allows providing electrical power to the heating element (if optionally implemented) and carrying a voltage (or current) signal from the first sensor 61 to the first control unit 81.

Fig.9 depicts an apparatus 1 for preparing a beverage from a solvent 20 and ingredients 25 according to another embodiment of the invention. In this embodiment, the apparatus 1 for preparing a beverage comprises a system 10 for carrying a solvent as illustrated in any of Fig.1 to Fig.6, an infuser 70, a second sensor 62, a second control unit 82, and optionally a heating element 60 as described with reference to Fig.6.

The infuser 70 is placed in the container 30 and connected to the second extremity 42 of the tube 40. When this apparatus is used, the quantity of solvent 20 that is poured into the container 30 is such that the infuser 70 is above the surface of the solvent 20. The infuser 70 is intended to contain the ingredients 25 and infuse the ingredients 25 with the solvent 20 exiting from the second extremity 42, as illustrated by arrows A1 at the second extremity 42. After infusing, in the infuser 70, the ingredients in the solvent, the solvent in the infuser 70 drops back into the container 30, as illustrated by arrows A2.

The second sensor 62 is intended to analyze parameters in the composition of the solvent 20.

The second control unit 82 is intended to stop the air pump 50 when the analyzed parameters have reached a predetermined level. In this manner, the composition of the beverage being prepared, i.e. the taste of the beverage, can be accurately controlled, and over-infusion of ingredients in the solvent can be avoided.

The second sensor 62 may correspond to a pH sensor which measures the pH value of the solvent 20, or to a chemical sensor which measures catechin, caffeine, aminophenol in the solvent 20.

The second sensor 62 is connected to the second control unit 82, and supplies a voltage (or current) signal to the second control unit 82, which signal reflects the composition of solvent 30. The second control unit 82 is connected to the air pump 50 such that it can switch off or switch on the electrical power supply of the air pump 50. To this end, the second control unit 82 comprises a comparator for comparing the value of the voltage (or current) signal, and a reference signal REF2. The reference signal REF2 reflects the predetermined parameter level that is desired for the solvent 20. If the voltage (or current) signal is below the reference signal REF2, indicating that the composition parameter level is below the predetermined level, the electrical power supply of the air pump 50 is switched-on. If the voltage (or current) signal is above the reference signal REF2, indicating that the composition parameter level is above the predetermined level, the electrical power supply of the air pump 50 is switched-off. According to this regulation scheme, the composition of solvent 20 is guarantied to reach the predetermined level.

It is noted that this apparatus could also comprise (not illustrated) a bottom part 36 cooperating with a base part 39 as depicted in Fig. 5, the magnetic, coil of the air pump being placed in the base part, the diaphragm air pump being placed in the bottom part, the heating element 60 being placed in the bottom part 36 as shown in Fig.6, and the second control unit 82 being placed in the base part. Cooperation between the bottom part 36 and the base part 39 is realized thanks to a connector comprising a plug and a socket placed in the bottom part 36 or the base part 39, respectively. This connector allows providing electrical power to the heating element (if optionally implemented) and carrying voltage (or current) signal from the second sensor 62 to the second control unit 82.

It is noted that this apparatus could also comprise (not illustrated) a first sensor 61 and a first control unit 81 as described with reference to Fig.8, the first control unit 81 being placed in the bottom part 36, or in the base part 39.

According to the invention, there is provided a method of carrying a solvent in a container containing the solvent, through a tube having a first extremity placed in the proximity of a bottom part of said container, and a second extremity extending up to an upper part of said container. Said upper part is above the surface of said solvent. Those elements correspond to elements of a system as described with reference to Fig.1.

The method comprises a step of generating, by means of the air pump, an air flow exiting at the bottom part of the container, such that at least part of the air flow can enter the tube at the first extremity, for carrying the solvent in the tube from the first extremity to the second extremity.

As described previously, the solvent in the tube is carried from the first extremity to the second extremity in combination with the air flow generated by the air pump instead of steam bubbles naturally generated by locally boiling water, such that the method allows carrying the solvent from the first extremity to the second extremity, while the solvent reaching the second extremity has a temperature much below the boiling temperature of the solvent.

According to another aspect of this method, the method of carrying a solvent further comprises a step of measuring the temperature of the solvent, and a step of controlling the heating power of a heating element placed in the container and intended to heat the solvent, such that the solvent is maintained at a predetermined temperature. This method is suitable for use in a system as illustrated in Fig.6.

With different temperature settings of the predetermined temperature, solvent is thus heated to different temperatures, according to the needs of users.

According to the invention, there is provided a method of preparing a beverage from a solvent and ingredients, using a container containing the solvent and accommodating a tube having a first extremity placed in the proximity of the bottom part of said container, and a second extremity extending up to an upper part of said container. Said upper part is above the surface of said solvent. Those elements correspond to elements of a system as described with reference to Fig.1.

The method comprises a step of generating by means of an air pump, an air flow exiting at said bottom part, such that at least part of said air flow can enter the tube at said first extremity, for carrying said solvent in said tube from said first extremity to said second extremity. This air pump may correspond to an air pump as described with reference to Fig.1. The method also comprises a step of infusing the ingredients in an infuser containing said ingredients, said infuser being placed at said second extremity to infuse said ingredients with the solvent exiting at said second extremity. This infuser may correspond to an infuser as described with reference to Fig.7, 8 or 9.

Advantageously, the method further comprises the steps of measuring the temperature of said solvent, and controlling the heating power of a heating element placed in said container and intended to heat said solvent, such that said solvent is maintained at a predetermined temperature. This can be achieved by, for example, using an apparatus as described with reference to Fig.8.

Advantageously, the method further comprises the steps of analyzing parameters in the composition of said solvent, and stopping the air pump when the analyzed parameters reach a predetermined level. This can be achieved by, for example, by using an apparatus as described with reference to Fig.9.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single unit may fulfill the functions of several items recited in the claims. The mere fact that certain measures are recited in mutually different dependent claims does not indicate that a combination of these measures cannot be used to advantage. Any reference signs in the claims should not be construed as limiting the scope thereof

## Claims

1. System (10) for carrying a solvent (20), said system comprising:
- a container (30) for containing said solvent,
- a tube (40) placed in said container, said tube having a first extremity (41) placed in the proximity of a bottom part (36) of said container, and a second extremity (42) extending up to an upper part of said container, and
- an air pump (50) for generating an air flow,
- an air flow exit (51) in the bottom part (36) of said container (30) for the air flow to exit at said bottom part underneath the first extremity of the tube, such that at least part of said air flow can enter the tube at said first extremity, for carrying said solvent in said tube from said first extremity to said second extremity.

2. A system as claimed in claim 1, wherein said air pump is placed in the bottom part of said container.

3. A system as claimed in claim 1, wherein said air pump comprises a magnetic coil (58) and a diaphragm air pump (57), said magnetic coil being intended to generate an oscillating magnetic field for bringing said diaphragm air pump into movement.

4. A system as claimed in claim 3, further comprising a base part (39) cooperating with said container, and wherein said magnetic coil is placed in said base part, and said diaphragm air pump is placed in said bottom part.

5. A system as claimed in claim 1, wherein the system further comprises a one-way valve (55) connecting the air pump (50) and the opening (51) made in the bottom part (36).

6. A system as claimed in claim 1, further comprising a heating element (60) placed in the bottom part of said container, said heating element being intended to heat said solvent.

7. An apparatus (10) for preparing a beverage from a solvent (20) and ingredients (25), said apparatus comprising:
- a system as claimed in anyone of claims 1 to 6, and
- an infuser (70) placed at said second extremity, said infuser being intended to contain said ingredients and infuse said ingredients with the solvent exiting at the second extremity.

8. An apparatus for preparing a beverage from a solvent and ingredients, said apparatus comprising:
- a system as claimed in claim 6,
- an infuser placed at said second extremity, said infuser being intended to contain said ingredients and infuse said ingredients with the solvent exiting at the second extremity,
- a first sensor (61) for measuring the temperature of said solvent; and
- a first control unit (81) for controlling, according to the measured temperature, the heating power of said heating element such that said solvent is maintained at a predetermined temperature.

9. An apparatus as claimed in claim 7 or 8, further comprising
- a second sensor (62) for analyzing parameters in the composition of said solvent; and
- a second control unit (82) for stopping said air pump when the analyzed parameters have reached a predetermined level.

10. A method of carrying a solvent in a container (30) containing the solvent through a tube (40) having a first extremity (41) placed in the proximity of a bottom part (36) of said container, and a second extremity (42) extending up to an upper part of said container, said method comprising the step of generating by means of an air pump (50), an air flow exiting via an air flow exit (51) in the bottom part (36) of said container (30) underneath the first extremity of the tube, such that at least part of said air flow can enter the tube at said first extremity, for carrying said solvent in said tube from said first extremity to said second extremity.

11. A method as claimed in claim 10, said method further comprising the steps of:
- measuring the temperature of said solvent; and
- controlling the heating power of a heating element placed in said container and intended to heat said solvent, such that said solvent is maintained at a predetermined temperature.

12. A method of preparing a beverage from a solvent and ingredients, using a container (30) containing the solvent and a tube (40) having a first extremity (41) placed in the proximity of the bottom part of said container, and a second extremity (42) extending up to an upper part of said container, said method comprising the steps of:
- generating by means of an air pump (50), an air flow exiting via an air flow exit (51) in the bottom part (36) of said container (30) underneath the first extremity of the tube, such that at least part of said air flow can enter the tube at said first extremity, for carrying said solvent in said tube from said first extremity to said second extremity; and
- infusing the ingredients in an infuser containing said ingredients, said infuser being placed at said second extremity to infuse said ingredients with the solvent exiting at said second extremity.

13. A method as claimed in claim 12, said method further comprising the steps of:
- measuring the temperature of said solvent; and
- controlling the heating power of a heating element placed in said container and intended to heat said solvent, such that said solvent is maintained at a predetermined temperature.

14. A method as claimed in claim 12 or 13, said method further comprising the steps of:
- analyzing parameters in the composition of said solvent; and
- stopping the air pump when the analyzed parameters reach a predetermined level.

15. A system as claimed in claim 5, further comprising a pipe arrangement (PA) connecting the air pump (50) and the one-way valve (55), said pipe arrangement (PA) comprising an angled section (AS) positioned above the maximum surface level of the solvent (20).

## Patentansprüche

1. System (10) zum Befördern eines Lösungsmittels (20), wobei das besagte System folgendes umfasst:
- einen Behälter (30) zum Beinhalten des besagten Lösungsmittels,
- ein Rohr (40), das im besagten Behälter platziert ist, wobei das besagte Rohr ein erstes Ende (41) aufweist, das in der Nähe eines Unterteils (36) des besagten Behälters platziert ist, und ein zweites Ende (42), das sich bis zu einem Oberteil des besagten Behälters erstreckt, und
- eine Luftpumpe (50) zum Erzeugen eines Luftstroms,
- einen Luftstromausgang (51) im Unterteil (36) des besagten Behälters (30), damit der Luftstrom im besagten Unterteil unterhalb des ersten Endes des Rohres austritt, sodass zumindest ein Teil des besagten Luftstroms am besagten ersten Ende in das Rohr eintreten kann, um das besagte Lösungsmittel im besagten Rohr vom besagten ersten Ende zum besagten zweiten Ende zu befördern.

2. System nach Anspruch 1, wobei die besagte Luftpumpe im Unterteil des besagten Behälters platziert ist.

3. System nach Anspruch 1, wobei die besagte Luftpumpe eine Magnetspule (58) und eine Membranluftpumpe (57) umfasst, wobei die besagte Magnetspule dazu bestimmt ist, ein oszillierendes Magnetfeld zu erzeugen, um die besagte Membranluftpumpe in Bewegung zu setzen.

4. System nach Anspruch 3, darüber hinaus einen Basisabschnitt (39) umfassend, das mit dem besagten Behälter zusammenwirkt, und wobei die besagte Magnetspule im besagten Basisabschnitt platziert ist, und die besagte Membranluftpumpe im besagten Unterteil platziert ist.

5. System nach Anspruch 1, wobei das System darüber hinaus ein Rückschlagventil (55) umfasst, das die Luftpumpe (50) und die Öffnung (51) verbindet, die im Unterteil (36) angebracht ist.

6. System nach Anspruch 1, darüber hinaus ein Heizelement (60) umfassend, das im Unterteil des besagten Behälters platziert ist, wobei das besagte Heizelement dazu bestimmt ist, um das besagte Lösungsmittel zu erwärmen.

7. Vorrichtung (10) zur Zubereitung eines Getränks aus einem Lösungsmittel (20) und Zutaten (25), wobei die besagte Vorrichtung folgendes umfasst:
- ein System nach irgendeinem der Ansprüche 1 bis 6, und
- einen Infuser (70), der am besagten zweiten Ende platziert ist, wobei der besagte Infuser dazu bestimmt ist, die besagten Zutaten zu enthalten, und die besagten Zutaten mit dem Lösungsmittel ziehen zu lassen, das am zweiten Ende austritt.

8. Vorrichtung zur Zubereitung eines Getränks aus einem Lösungsmittel und Zutaten, wobei die besagte Vorrichtung folgendes umfasst:
- ein System nach Anspruch 6,
- einen am besagten zweiten Ende platzierten Infuser, wobei der besagte Infuser dazu bestimmt ist, um die besagten Zutaten zu enthalten, und die besagten Zutaten mit dem Lösungsmittel ziehen zu lassen, das am zweiten Ende austritt,
- einen ersten Sensor (61) zum Messen der Temperatur des besagten Lösungsmittels; und
- eine erste Steuereinheit (81) zum Steuern der Heizleistung des besagten Heizelements entsprechend der gemessenen Temperatur, sodass das besagte Lösungsmittel auf einer vorbestimmten Temperatur gehalten wird.

9. Vorrichtung nach Anspruch 7 oder 8, darüber hinaus folgendes umfassend
- einen zweiten Sensor (62) zum Analysieren von Parametern in der Zusammensetzung des besagten Lösungsmittels; und
- eine zweite Steuereinheit (82) zum Anhalten der besagten Luftpumpe, wenn die analysierten Parameter ein vorbestimmtes Niveau erreicht haben.

10. Verfahren zum Befördern eines Lösungsmittels in einen das Lösungsmittel enthaltenden Behälter (30) durch ein Rohr (40), das ein erstes Ende (41) aufweist, das in der Nähe eines Unterteils (36) des besagten Behälters platziert ist, und ein zweites Ende (42), das sich bis zu einem Oberteil des besagten Behälters erstreckt, wobei das besagte Verfahren den Schritt zum Erzeugen eines Luftstroms anhand einer Luftpumpe (50) umfasst, der über einen Luftstromausgang (51) im Unterteil (36) des besagten Behälters (30) unterhalb des ersten Endes des Rohres austritt, sodass zumindest ein Teil des besagten Luftstroms am besagten ersten Ende in das Rohr eintreten kann, um das besagte Lösungsmittel im besagten Rohr vom besagten ersten Ende zum besagten zweiten Ende zu befördern.

11. Verfahren nach Anspruch 10, wobei das besagte Verfahren darüber hinaus die folgenden Schritte umfasst:
- Messen der Temperatur des besagten Lösungsmittels; und
- Steuern der Heizleistung eines im besagten Behälter platzierten Heizelements, das dazu bestimmt ist, um das besagte Lösungsmittel zu erwärmen, sodass das besagte Lösungsmittel auf einer vorbestimmten Temperatur gehalten wird.

12. Verfahren zur Zubereitung eines Getränks aus einem Lösungsmittel und Zutaten, das einen das Lösungsmittel enthaltenden Behälter (30) und ein Rohr (40) verwendet, das ein erstes Ende (41) aufweist, das in der Nähe des Unterteils des besagten Behälters platziert ist, und ein zweites Ende (42), das sich bis zu einem Oberteil des besagten Behälters erstreckt, wobei das besagte Verfahren die folgenden Schritte umfasst:
- Erzeugen eines Luftstroms anhand einer Luftpumpe (50), der über einen Luftstromausgang (51) im Unterteil (36) des besagten Behälters (30) unterhalb des ersten Endes des Rohres austritt, sodass zumindest ein Teil des besagten Luftstroms am besagten ersten Ende in das Rohr eintreten kann, um das besagte Lösungsmittel im besagten Rohr vom besagten ersten Ende zum besagten zweiten Ende zu befördern; und
- Ziehen lassen der Zutaten in einem Infuser, der die besagten Zutaten enthält, wobei der besagte Infuser am besagten zweiten Ende platziert ist, um die besagten Zutaten mit dem Lösungsmittel ziehen zu lassen, das am besagten zweiten Ende austritt.

13. Verfahren nach Anspruch 12, wobei das besagte Verfahren darüber hinaus die folgenden Schritte umfasst:
- Messen der Temperatur des besagten Lösungsmittels; und
- Steuern der Heizleistung eines im besagten Behälter platzierten Heizelements das dazu bestimmt ist, um das besagte Lösungsmittel zu erwärmen, sodass das besagte Lösungsmittel auf einer vorbestimmten Temperatur gehalten wird.

14. Verfahren nach Anspruch 12 oder 13, wobei das besagte Verfahren darüber hinaus die folgenden Schritte umfasst:
- Analysieren der Parameter in der Zusammensetzung des besagten Lösungsmittels; und
- Anhalten der besagten Luftpumpe, wenn die analysierten Parameter ein vorbestimmtes Niveau erreicht haben.

15. System nach Anspruch 5, darüber hinaus eine Rohrleitungsanordnung (PA) umfassend, welche die Luftpumpe (50) und das Rückschlagventil (55) verbindet, wobei die besagte Rohrleitungsanordnung (PA) einen abgewinkelten Abschnitt (AS) umfasst, der über dem maximalen Oberflächenniveau des Lösungsmittels (20) positioniert ist.

## Revendications

1. Système (10) pour transporter un solvant (20), ledit système comprenant :
- un contenant (30) pour contenir ledit solvant,
- un tube (40) placé dans ledit contenant, ledit tube possédant une première extrémité (41) placée à proximité d'une partie inférieure (36) dudit contenant, et une seconde extrémité (42) s'étendant jusqu'à une partie supérieure dudit contenant, et
- une pompe à air (50) pour générer un écoulement d'air,
- une sortie d'écoulement d'air (51) dans la partie inférieure (36) dudit contenant (30) pour que l'écoulement d'air sorte au niveau de ladite partie inférieure en dessous de la première extrémité du tube, de telle sorte qu'au moins une partie dudit écoulement d'air puisse entrer dans le tube à ladite première extrémité, pour transporter ledit solvant dans ledit tube, de ladite première extrémité à ladite seconde extrémité.

2. Système selon la revendication 1, dans lequel ladite pompe à air est placée dans la partie inférieure dudit contenant.

3. Système selon la revendication 1, dans lequel ladite pompe à air comprend une bobine magnétique (58) et une pompe à air à diaphragme (57), ladite bobine magnétique étant prévue pour générer un champ magnétique oscillant pour mettre ladite pompe à air à diaphragme en mouvement.

4. Système selon la revendication 3, comprenant en outre une partie de base (39) coopérant avec ledit contenant, et dans lequel ladite bobine magnétique est placée dans ladite partie de base, et ladite pompe à air à diaphragme est placée dans ladite partie inférieure.

5. Système selon la revendication 1, dans lequel le système comprend en outre une valve unidirectionnelle (55) raccordant la pompe à air (50) et l'ouverture (51) réalisée dans la partie inférieure (36).

6. Système selon la revendication 1, comprenant en outre un élément chauffant (60) placé dans la partie inférieure dudit contenant, ledit élément chauffant étant prévu pour chauffer ledit solvant.

7. Appareil (10) pour préparer une boisson à partir d'un solvant (20) et d'ingrédients (25), ledit appareil comprenant :
- un système selon l'une quelconque des revendications 1 à 6, et
- un dispositif d'infusion (70) placé à ladite seconde extrémité, ledit dispositif d'infusion étant prévu pour contenir lesdits ingrédients et infuser lesdits ingrédients avec le solvant sortant à la seconde extrémité.

8. Appareil pour préparer une boisson à partir d'un solvant et d'ingrédients, ledit appareil comprenant :
- un système selon la revendication 6,
- un dispositif d'infusion placé à ladite seconde extrémité, ledit dispositif d'infusion étant prévu pour contenir lesdits ingrédients et infuser lesdits ingrédients avec le solvant sortant à la seconde extrémité,
- un premier capteur (61) pour mesurer la température dudit solvant ; et
- une première unité de commande (81) pour commander, selon la température mesurée, la puissance de chauffage dudit élément chauffant de telle sorte que ledit solvant soit maintenu à une température prédéterminée.

9. Appareil selon la revendication 7 ou 8, comprenant en outre :
- un second capteur (62) pour analyser des paramètres dans la composition dudit solvant ; et
- une seconde unité de commande (82) pour arrêter ladite pompe à air lorsque les paramètres analysés ont atteint un niveau prédéterminé.

10. Procédé de transport d'un solvant dans un contenant (30), contenant le solvant, à travers un tube (40) possédant une première extrémité (41) placée à proximité d'une partie inférieure (36) dudit contenant, et une seconde extrémité (42) s'étendant jusqu'à une partie supérieure dudit contenant, ledit procédé comprenant l'étape de la génération, au moyen d'une pompe à air (50), d'un écoulement d'air sortant par l'intermédiaire d'une sortie d'écoulement d'air (51) dans la partie inférieure (36) dudit contenant (30) en dessous de la première extrémité du tube, de telle sorte qu'au moins une partie dudit écoulement d'air puisse entrer dans le tube à ladite première extrémité, pour transporter ledit solvant dans ledit tube, de ladite première extrémité à ladite seconde extrémité.

11. Procédé selon la revendication 10, ledit procédé comprenant en outre les étapes de :
- la mesure de la température dudit solvant ; et
- la commande de la puissance de chauffage d'un élément chauffant placé dans ledit contenant et prévu pour chauffer ledit solvant, de telle sorte que ledit solvant soit maintenu à une température prédéterminée.

12. Procédé de préparation d'une boisson à partir d'un solvant et d'ingrédients, en utilisant un contenant (30) contenant le solvant et un tube (40) possédant une première extrémité (41) placée à proximité de la partie inférieure dudit contenant, et une seconde extrémité (42) s'étendant jusqu'à une partie supérieure dudit contenant, ledit procédé comprenant les étapes de :
- la génération, au moyen d'une pompe à air (50), d'un écoulement d'air sortant par l'intermédiaire d'une sortie d'écoulement d'air (51) dans la partie inférieure (36) dudit contenant (30) en dessous de la première extrémité du tube, de telle sorte qu'au moins une partie dudit écoulement d'air puisse entrer dans le tube à ladite première extrémité, pour transporter ledit solvant dans ledit tube, de ladite première extrémité à ladite seconde extrémité ; et
- l'infusion des ingrédients dans un dispositif d'infusion contenant lesdits ingrédients, ledit dispositif d'infusion étant placé à ladite seconde extrémité pour infuser lesdits ingrédients avec le solvant sortant à ladite seconde extrémité.

13. Procédé selon la revendication 12, ledit procédé comprenant en outre les étapes de :
- la mesure de la température dudit solvant ; et
- la commande de la puissance de chauffage d'un élément chauffant placé dans ledit contenant et prévu pour chauffer ledit solvant, de telle sorte que ledit solvant soit maintenu à une température prédéterminée.

14. Procédé selon la revendication 12 ou 13, ledit procédé comprenant en outre les étapes de :
- l'analyse de paramètres dans la composition dudit solvant ; et
- l'arrêt de la pompe à air lorsque les paramètres analysés atteignent un niveau prédéterminé.

15. Système selon la revendication 5, comprenant en outre un agencement de tuyau (PA) raccordant la pompe à air (50) et la valve unidirectionnelle (55), ledit agencement de tuyau (PA) comprenant une section inclinée (AS) positionnée au-dessus du niveau de surface maximum du solvant (20).
